# EUROPEAN PATENT APPLICATION

(11) **EP 4 640 092 A1**
(43) Date of publication of application: **29.10.2025**
(21) Application number: 22969152.2
(22) Date of filing: 20.12.2022
(51) Int. Cl.: A24F 40/53

(54) **AEROSOL GENERATION DEVICE AND PROGRAM**

(71) Applicant: Japan Tobacco Inc., Tokyo 105-6927 (JP)
(72) Inventor: MINATO, Junji, Tokyo 130-8603 (JP)
(74) Representative: Hoffmann Eitle
(86) International application number: PCT/JP2022/046877
(87) International publication number: WO 2024/134763

(57) **Abstract**

This aerosol generation device has a control unit, a secondary battery, and a heating unit that heats an aerosol source, wherein the control unit corrects a threshold used for determining the presence or absence of a remaining amount with which one unused aerosol source can be fully used, in accordance with the state of deterioration of the secondary battery.

## Description

### TECHNICAL FIELD

The present invention relates to an aerosol-generating device and a program.

### BACKGROUND ART

Aerosol-generating devices are devices for generating an aerosol by heating an aerosol source comprising a flavoring or the like, and a secondary battery built into a main body is used as a power source thereof. When the remaining capacity of the secondary battery runs out during heating of the aerosol source, then even if there is still remaining aerosol source that would enable an aerosol to be generated, the user needs to discard the relevant aerosol source. PTL 1 therefore describes technology for determining that the remaining capacity needed to fully use the aerosol source is present, before heating of the aerosol source is started.

### CITATION LIST

### PATENT LITERATURE

PTL 1 WO 2020/084757A1.

### SUMMARY OF INVENTION

### TECHNICAL PROBLEM

Repeated charging and discharging causes deterioration of the secondary battery, as is well known. In a secondary battery with advancing deterioration, the amount of electricity that can be discharged (i.e., the discharge capacity) from a state of full charge is smaller than the amount before deterioration started (i.e., the initial state).

Existing aerosol-generating devices use a fixed value as a threshold for determining the remaining capacity of the secondary battery. This fixed value is set with no regard to the extent of deterioration of the secondary battery. A lack of remaining capacity is therefore sometimes determined when there is little deterioration, even in a state where one or more unused aerosol sources could still be fully used.

In light of the problem above, the present disclosure provides technology for increasing the number of aerosol sources that can be fully used with one full charge, as compared to existing devices.

### SOLUTION TO PROBLEM

One aspect of the present disclosure provides an aerosol-generating device comprising a control unit, a secondary battery, and a heating unit for heating an aerosol source, wherein the control unit corrects, in accordance with a state of deterioration of the secondary battery, a threshold used to determine whether or not there is remaining capacity enabling one unused aerosol source to be fully used.

The threshold may be increased as deterioration of the secondary battery progresses.

In addition, the threshold may be increased linearly as deterioration of the secondary battery progresses.

An initial value of the threshold may be defined by the remaining capacity enabling the secondary battery in a largely undeteriorated state to generate a guaranteed operating voltage of the aerosol-generating device.

The threshold may be set in accordance with a minimum value of the remaining capacity required by the secondary battery at the present time in order to generate the guaranteed operating voltage of the aerosol-generating device.

One aspect of the present disclosure provides a program for causing a computer, which is provided in an aerosol-generating device comprising a secondary battery and a heating unit for heating an aerosol source, to implement: a function for correcting, in accordance with a state of deterioration of the secondary battery, a threshold used to determine whether or not there is remaining capacity enabling one unused aerosol source to be fully used; a function for determining whether or not the remaining capacity of the secondary battery at the present time is above the threshold; a function for permitting heating of the aerosol source by the heating unit when the remaining capacity of the secondary battery at the present time is above the threshold; and a function for prohibiting heating of the aerosol source by the heating unit when the remaining capacity of the secondary battery at the present time is below the threshold.

### ADVANTAGEOUS EFFECTS OF INVENTION

According to one aspect of the present disclosure, the number of aerosol sources that can be fully used with one full charge can be increased as compared to existing devices.

### BRIEF DESCRIPTION OF DRAWINGS

Fig. 1 is a diagram in which a front face side of an aerosol-generating device is viewed from diagonally above.
Fig. 2 is a diagram in which an upper face of the aerosol-generating device is viewed from above.
Fig. 3 is a diagram schematically showing the internal configuration of a main body device.
Fig. 4 is a diagram schematically showing connection relationships in an electronic circuit of the main body device.
Fig. 5 is a diagram illustrating an example of a control profile used in the aerosol-generating device.
Fig. 6 is a diagram illustrating a threshold used to determine whether or not the secondary battery has the remaining capacity needed in order to fully use one unused stick-type substrate.
Fig. 7 is a flowchart illustrating last-stick determination processing performed by the aerosol-generating device of Embodiment 1.
Fig. 8 is a flowchart illustrating last-stick determination processing performed by the aerosol-generating device of Embodiment 2.
Fig. 9 is a diagram showing an example of a table used in step 11 in fig. 8.
Fig. 10 is a flowchart illustrating last-stick determination processing performed by an aerosol-generating device 1 of Embodiment 3.
Fig. 11 is a flowchart illustrating last-stick determination processing performed by an aerosol-generating device 1 of Embodiment 4.
Fig. 12 is a diagram showing an example of a table used in step 31 in fig. 11.

### DESCRIPTION OF EMBODIMENTS

Embodiments relating to the present disclosure will be described below with reference to the drawings. In the drawings, identical parts are indicated by identical reference signs.

### <Terms>

An aerosol-generating device according to each embodiment is a form of electronic cigarette.

In the following description, a substance generated by the aerosol-generating device will be referred to as an aerosol. An aerosol refers to a mixture of minute liquid or solid particles suspended in a gas, and air or another gas.

The embodiments describe aerosol-generating devices which generate the aerosol without associated burning.

In the following description, the action of a user inhaling the aerosol generated by the aerosol-generating device will be referred to as "inhalation" or "a puff".

In each embodiment, an aerosol-generating device to which it is possible to attach a solid aerosol source is described. It should be noted that a container storing the solid aerosol source is also referred to as a "capsule" or a "stick-type substrate" depending on the product format. Capsules and stick-type substrates are consumables. Capsules and stick-type substrates therefore have fixed criteria for replacement.

### EMBODIMENT 1

### <Example of External Appearance>

An example of the external appearance of an aerosol-generating device used in embodiment 1 will be described first of all.

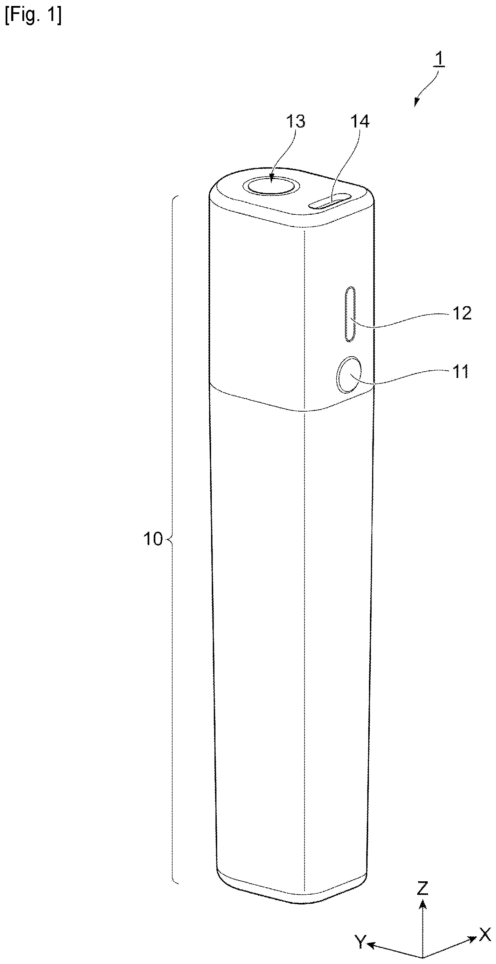

Fig. 1 is a diagram in which a front face side of an aerosol generating device 1 is viewed from diagonally above.

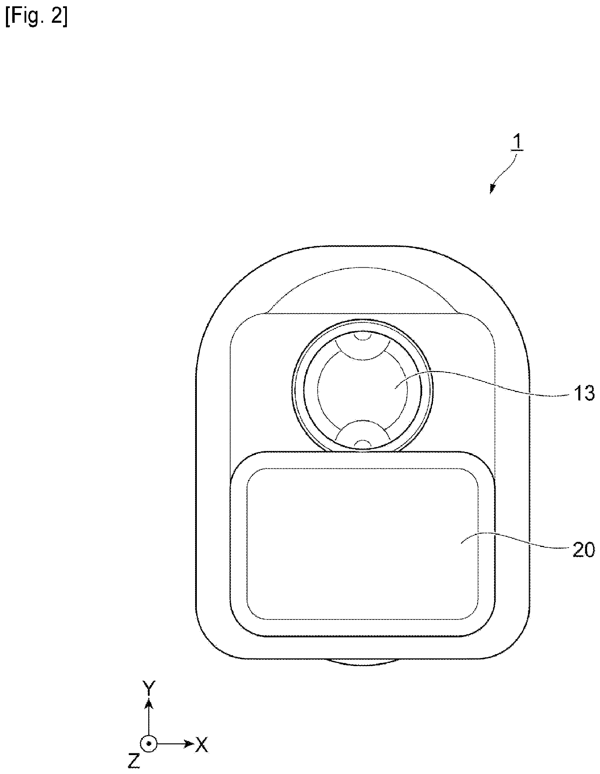

Fig. 2 is a diagram in which an upper face of the aerosol-generating device 1 is viewed from above.

The aerosol-generating device 1 is configured by a main body device 10, and a slide cover 20 which can be slidably operated along an upper face of the main body device 10. It should be noted that, for convenience of description, fig. 1 shows a state in which the slide cover 20 has been removed from the upper face of the main body device 10.

In this embodiment, the face on which a power button 11 is provided will be referred to as a "front face".

Furthermore, the face on which an insertion port into which a stick-type substrate is inserted (referred to below as a "stick-type substrate insertion port") 13 is provided will be referred to as an "upper face".

Moreover, the face opposite the upper face will be referred to as the "bottom face", and the other three faces will be referred to as "side faces".

An LED lamp 12 is provided on the front face of the main body device 10, in addition to the power button 11.

A USB (= universal serial bus) cable insertion port 14 is provided on the upper face of the main body device 10, in addition to the stick-type substrate insertion port 13.

The power button 11 is used for instructing the start of heating of the stick-type substrate, for resets, and for instructing Bluetooth (registered trademark) pairing, for example. A reset is performed by a long press (e.g., a press of 5 seconds or more) on the power button 11. BLE (= Bluetooth low energy) is used as Bluetooth in this embodiment.

The LED lamp 12 is used to notify operating states of the main body device 10, and remaining capacity of a secondary battery, for example. In this embodiment, a surface of the LED lamp 12 is covered by a light-transmitting material, which enables a user to observe a state of illumination of the LED lamp 12.

Operating states include a state of progress of a heating cycle, a state of progress of charging, and errors, for example.

When the state of progress of the heating cycle is notified, the length of the illuminated part of the LED lamp 12 shows the remaining usable time. Moreover, the LED lamp 12 flashes slowly when there is little remaining time.

When the state of progress of charging is notified, the LED lamp 12 flashes during charging, and the length of the flashing part of the LED lamp 12 becomes longer as the stored electricity increases due to charging. Moreover, when charging is complete, the LED lamp 12 turns off or stays in an illuminated state.

When the remaining capacity of the secondary battery is displayed, the battery remaining capacity is displayed by the length of a dotted part of the LED lamp 12 at the point in time when the slide cover 20 is opened or at the point in time when the slide cover 20 is closed, for example.

Moreover, the LED lamp 12 flashes when the secondary battery has little remaining capacity. Furthermore, the LED lamp 12 flashes rapidly in a state in which the remaining capacity of the secondary battery will not allow even one unused stick-type substrate to be smoked.

The slide cover 20 has dimensions covering approximately half of the upper face. The slide cover 20 operated to the open state completely conceals the USB cable insertion port 14, and the slide cover 20 operated to the closed state completely conceals the stick-type substrate insertion port 13. That is to say, the slide cover 20 has the role of alternately concealing either one of the stick-type substrate insertion port 13 and the USB cable insertion port 14. Fig. 2 shows a state in which the slide cover 20 has been operated to the open state.

The stick-type substrate used in this embodiment accommodates a solid aerosol source in a paper tube molded substantially into a cylindrical shape. The shape of the stick-type substrate insertion port 13 is therefore indicated in both fig. 1 and 2 by a circular shape which is largely the same shape as a stick-type substrate 30. The diameter of an opening part of the stick-type substrate insertion port 13 constitutes the dimension of a stick-type substrate which can be inserted. In other words, the diameter of the stick-type substrate is the dimension which can be inserted into the stick-type substrate insertion port 13.

The USB cable insertion port 14 is compatible with type C in this embodiment. However, this does not mean that the shape of the terminal used for charging the secondary battery is limited to type C, or limited to USB. The terminal of the power source cable used for charging the secondary battery may be of another type.

A magnet, for example, is attached to a rear face of the slide cover 20. Meanwhile, a Hall IC is attached to the main body device 10 in a movable range of the slide cover 20.

The Hall IC is a magnetic sensor formed by a Hall element and an operational amplifier, etc., and outputs a voltage commensurate with the intensity of the magnetic field passing across the Hall element.

In this embodiment, opening and closing of the slide cover 20 is detected from a change in the voltage output from the Hall IC accompanying sliding of the slide cover 20. That is to say, it is detected whether the slide cover 20 is at the closed position or the open position.

The aerosol-generating device 1 of this embodiment has a size that can be held by a user in a single hand.

Various types of electronic components required for generating an aerosol are built into the main body device 10. In this sense, the main body device 10 is an example of an electronic device specifically for generating an aerosol. Moreover, in a narrow sense the main body device 10 is referred to as an aerosol-generating device.

### <Internal Configuration>

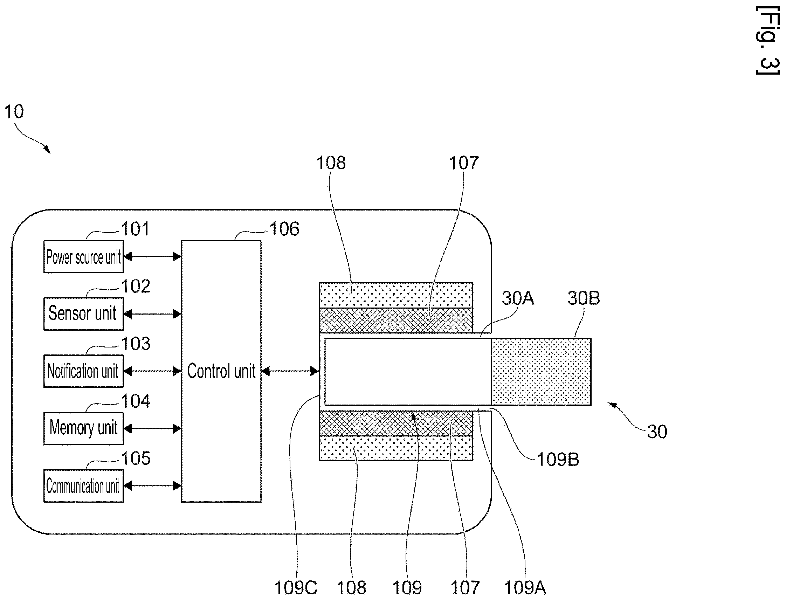

Fig. 3 is a diagram schematically showing the internal configuration of the main body device 10. It should be noted that fig. 3 shows a state in which the stick-type substrate 30 is fitted to the main body device 10. Furthermore, the internal configuration shown in fig. 3 is intended to illustrate the components provided in the main body device 10 and positional relationships thereof. For this reason, the external appearance of the components, etc. shown in fig. 3 does not always match the external appearance diagrams described above.

The main body device 10 is configured by: a power source unit 101, a sensor unit 102, a notification unit 103, a memory unit 104, a communication unit 105, a control unit 106, a heating unit 107, a heat insulating portion 108, and a holding portion 109.

As described above, fig. 3 shows a state in which the stick-type substrate 30 is held in the holding portion 109. The aerosol is inhaled by the user in that state.

The power source unit 101 is a unit for supplying power to each unit. The power source unit 101 stores power in a lithium-ion secondary battery, for example. A lithium ion secondary battery is used in this embodiment.

The secondary battery is chargeable from an external power source. A mains power source or a mobile battery, for example, is feasible as an external power source in this embodiment.

The sensor unit 102 is an electronic component for detecting various types of information relating to the main body device 10.

The sensor unit 102 has a pressure sensor such as a microphone capacitor, or a flow rate sensor, for example. The sensor unit 102 outputs detected information to the control unit 106. For example, when a change in air pressure or a flow of air accompanying inhalation has been detected, the sensor unit 102 outputs a numerical value representing inhalation of the aerosol by the user to the control unit 106.

The sensor unit 102 is provided in conjunction with a button or switch used for receiving user operations, for example. The button as referred to here includes the abovementioned power button 11 (see fig. 1). Furthermore, the switch includes the abovementioned slide cover 20 (see fig. 2).

When a user operation has been detected, the sensor unit 102 outputs detection of the operation to the control unit 106.

The sensor unit 102 additionally has a temperature sensor for detecting the temperature of the heating unit 107. The temperature sensor detects the temperature of the heating unit 107 on the basis of an electrical resistance value of a conductive track of the heating unit 107, for example. The detected electrical resistance value is output from the sensor unit 102 to the control unit 106. It should be noted that the control unit 106 calculates the temperature of the heating unit 107 on the basis of the electrical resistance value. In other words, the control unit 106 calculates the temperature of the stick-type substrate 30 which is held in the holding portion 109.

The notification unit 103 is an electronic component for notifying the user of various types of information relating to the main body device 10. The notification unit 103 includes the LED lamp 12 (see fig. 1), for example. When the power source unit 101 needs to be charged, when the power source unit 101 is in the process of being charged, or when there is an abnormality in the main body device 10, the LED lamp 12 emits light with different patterns for each.

The patterns as referred to here include different colors and different timings for illumination/extinguishing, etc. It should be noted that the LED lamp 12 is an example of a light-emitting device.

The notification unit 103 may also include another device which is used together with the light-emitting device or used instead of the light-emitting device. Devices of this type include: display devices for displaying text, images and other information, sound output devices for outputting a sound, and vibration devices for causing the main body device 10 to vibrate, etc.

The light-emitting device, display device, sound output device and vibration device, etc. are examples of notification units for notifying information.

The notification unit 103 may additionally notify the user of a state in which the aerosol can be inhaled. This notification indicates a state in which the temperature of the stick-type substrate 30 heated by means of the heating unit 107 has reached a predetermined temperature.

The memory unit 104 stores various types of information relating to operation of the main body device 10. The memory unit 104 is configured by a non-volatile storage medium such as a flash memory, for example.

Information stored in the memory unit 104 includes an operating system (= OS) and firmware (= FW), and other programs, for example.

Furthermore, the information stored in the memory unit 104 includes information relating to control of electronic components, for example. Information relating to control includes information relating to: remaining capacity and SOH (= state of health) of the secondary battery; and inhalation by the user, such as number of inhalations, times of inhalation, and cumulative inhalation time

The communication unit 105 is a communication interface for implementing communication between the main body device 10 and another device. The communication unit 105 communicates with other devices by means of a system based on any wired or wireless communication standard. Examples of communication standards as referred to here include wireless LAN (= local area network), serial signal line, Wi-Fi (registered trademark), and Bluetooth.

For example, the communication unit 105 sends the information relating to user inhalation to a smartphone. Furthermore, the communication unit 105 downloads, from a server, update programs and control profiles stipulating changes in temperature of the heating unit 107 in a heating mode.

The control unit 106 functions as an arithmetic processing device and a control device, controlling operations of the main body device 10 in accordance with various programs.

Control signals are sent through signal lines different from the power source line. For example, communication in the main body device 10 employs a serial communication method such as an inter-integrated circuit (= I2C) communication method, a serial peripheral interface (= SPI) communication method, or a universal asynchronous receiver transmitter (= UART) communication method.

The control unit 106 is realized by means of an electronic circuit such as a central processing unit (= CPU), a microcontroller unit (= MCU), a microprocessing unit (= MPU), a graphical processing unit (= GPU), an application-specific integrated circuit (= ASIC), a field programmable gate array (= FPGA), or a digital signal processor (= DSP), for example.

The control unit 106 may also include a read only memory (= ROM) for storing programs and computation parameters, etc., and a random access memory (= RAM) for temporarily storing suitably changing parameters, etc.

The control unit 106 executes various types of processing and control through execution of programs.

The processing and control referred to here include, for example: supply of electricity by the power source unit 101; charging of the power source unit 101; detection of information by the sensor unit 102; notification of information employing the notification unit 103; writing of information to the memory unit 104 or reading of information from the memory unit 104; and sending/receiving of information employing the communication unit 105.

The control unit 106 additionally controls processing, etc. based on input of information to the electronic components and information output from the electronic components.

The holding portion 109 is a substantially cylindrical container. In this embodiment, a space inside the holding portion 109 defined by an inner wall and a bottom face will be referred to as an internal space 109A. The internal space 109A is substantially columnar.

An opening 109B allowing the internal space 109A to communicate with the exterior is provided in the holding portion 109. The stick-type substrate 30 is inserted into the internal space 109A from the opening 109B. The opening 109B as referred to here corresponds to the stick-type substrate insertion port 13 in fig. 1. The stick-type substrate 30 is inserted until a tip end thereof touches a bottom portion 109C.

The stick-type substrate 30 is only partially accommodated in the internal space 109A. A state in which the stick-type substrate 30 is accommodated in the internal space 109A will be referred to as the stick-type substrate 30 being held in the internal space 109A.

The inner diameter of at least part of the holding portion 109 in an axial direction thereof is formed so as to be smaller than the outer diameter of the stick-type substrate 30.

An outer circumferential surface of the stick-type substrate 30 inserted into the internal space 109A is therefore subjected to pressure from the inner wall of the holding portion 109. The stick-type substrate 30 is held in the internal space 109A by means of this pressure.

The holding portion 109 also has a function for defining a flow path for air passing through the stick-type substrate 30. An air inflow hole which is an inlet for air into the flow path is disposed in the bottom portion 109C, for example. Moreover, the opening 109B serves as an air outflow hole which is an outlet for the air.

In this embodiment, only part of the stick-type substrate 30 is held in the holding portion 109, with the remainder protruding outside from an enclosure. The part which is held in the holding portion 109 will be referred to below as a substrate portion 30A, and the part protruding from the enclosure will be referred to below as a mouthpiece portion 30B.

The aerosol source is accommodated in at least the substrate portion 30A. The aerosol source is a substance which is atomized by heating so as to generate an aerosol.

Other than shredded tobacco, the aerosol source contains a processed product obtained by molding a tobacco raw material into a granular form, a sheet form or a powder form, or another tobacco-derived substance.

In addition, the aerosol source may also contain a non-tobacco-derived substance produced from a plant other than tobacco, such as mint or herb. The aerosol source may contain a flavoring component such as menthol, for example.

When the main body device 10 is a medical inhaler, the aerosol source may contain a drug to be inhaled by a patient. It should be noted that the aerosol source is not limited to a solid, and may equally be a polyhydric alcohol such as glycerol or propylene glycol, or may be a liquid such as water, for example.

At least part of the mouthpiece portion 30B is held in the user's mouth during inhalation.

When the user inhales with the mouthpiece portion 30B held in the mouth, air flows into the internal space 109A from the air inflow hole. The air which has flowed in reaches the user's mouth after passing through the internal space 109A and the substrate portion 30A. The air reaching the user's mouth contains the aerosol generated by the substrate portion 30A.

The heating unit 107 is formed by a heater or other heat-generating element. The heating unit 107 is formed by any material such as a metal or polyimide. The heating unit 107 is constructed in the form of a film, for example, and fitted to the outer circumferential surface of the holding portion 109.

The aerosol source contained in the stick-type substrate 30 is heated and atomized by the heat generated by the heating unit 107. The atomized aerosol source is mixed with air, etc., and an aerosol is generated.

In fig. 3, the outer circumferential region of the stick-type substrate 30 is initially heated, with the range of heating steadily moving toward the center.

Atomization of the aerosol source therefore starts from the outer circumferential region of the stick-type substrate 30 and steadily moves toward the center.

The heating unit 107 generates heat by means of electrical supply from the power source unit 101. Electrical supply to the heating unit 107 is permitted when a predetermined user operation has been detected by means of the sensor unit 102, for example. The predetermined user operation as referred to here includes operation of the slide cover 20 (see fig. 2) and/or of the power button 11 (see fig. 1).

Moreover, inhalation by the user becomes possible when the temperature of the stick-type substrate 30 heated by means of the heating unit 107 reaches a predetermined temperature. Inhalation of the aerosol by the user is detected by means of the flow rate sensor, etc. in the sensor unit 102 and saved in the memory unit 104.

Electrical supply to the heating unit 107 is stopped when a predetermined user operation is subsequently detected. The predetermined user operation includes an operation to close the slide cover 20.

It should be noted that, even if the predetermined user operation is not detected, electrical supply to the heating unit 107 is stopped when the heating time defined in the control profile has expired.

It is additionally possible to adopt a method in which electricity is supplied to the heating unit 107 while inhalation by the user is detected, and electrical supply to the heating unit 107 is stopped when inhalation by the user is no longer detected.

Furthermore, in the example of fig. 3, the heating unit 107 is disposed at the outer circumferential portion of the stick-type substrate 30, but it is equally possible for the heating unit 107 to be a blade-like metal piece which is inserted into the stick-type substrate 30, or for the heating unit 107 to be a metal piece built into the stick-type substrate 30. When a metal piece acting as the heating unit 107 is built into the stick-type substrate 30, an induction heating coil should be arranged around the holding portion 109.

The heat insulating portion 108 is a member for reducing propagation of heat generated by the heating unit 107 to the surrounding area. The heat insulating portion 108 is therefore disposed so as to cover at least the outer circumferential surface of the heating unit 107.

For example, the heat insulating portion 108 is configured by a vacuum insulating material or an aerogel insulating material, etc. A vacuum insulating material is a heat insulating material in which a state of high vacuum is created by wrapping glass wool and silica (silicon powder), etc. in a resin film, for example, so that heat conduction by gas is as close as possible to zero.

### <Electronic Circuit Connection Configuration>

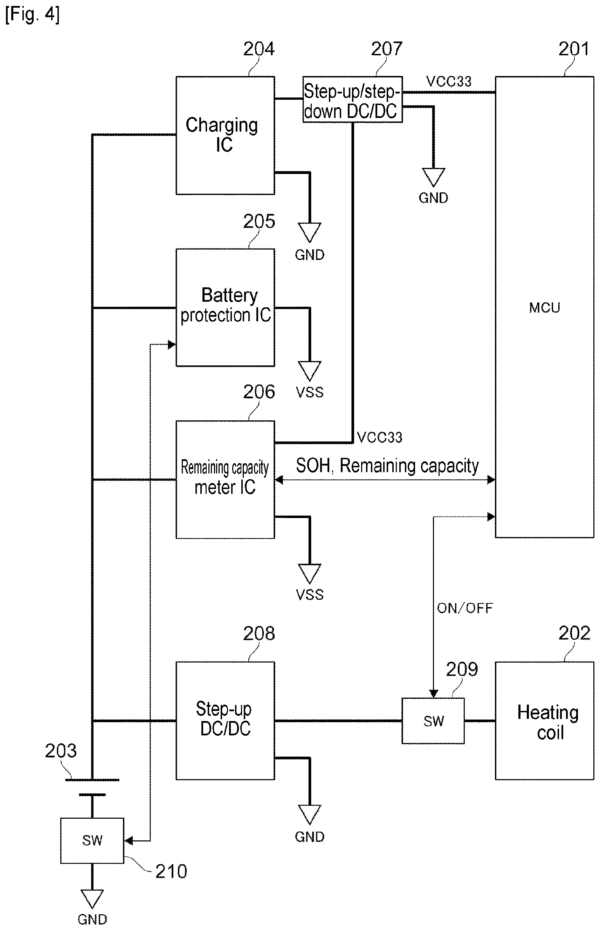

Fig. 4 is a diagram schematically showing connection relationships in the electronic circuit of the main body device 10. Fig. 4 illustrates typical connection relationships among components, unlike the functional configuration illustrated in fig. 3.

Fig. 4 shows: an MCU 201 serving as the control unit 106 (see fig. 3), a heating coil 202 serving as the heating unit 107 (see fig. 3), a secondary battery 203 serving as the power source unit 101 (see fig. 3), a charging IC 204, a battery protection IC 205, a remaining capacity meter IC 206, a step-up/step-down DC/DC circuit 207, a step-up DC/DC circuit 208, and switches 209, 210.

In fig. 4, power source lines are denoted by the thick lines, and signal lines are denoted by the narrow lines with arrows.

The charging IC 204 is a circuit for controlling distribution of power supplied from the secondary battery 203 and supply of power from an external power source to the secondary battery 203 during charging.

An output voltage of the secondary battery 203 is high in a state of full charge, but drops as the remaining capacity of the secondary battery 203 decreases. Meanwhile, the parts of the aerosol-generating device 1 have various required voltage values. A system power source VCC33 required for operation of the MCU 201 etc. is fixed at 3.3 V.

An output terminal of the charging IC 204 shown in fig. 4 is therefore connected to the step-up/step-down DC/DC circuit 207 via a power source line.

The step-up/step-down DC/DC circuit 207 steps up or steps down the output voltage of the secondary battery 203 and outputs a voltage of 3.3 V (i.e., VCC33) to the power source line.

It should be noted that the charging IC 204 applies a voltage of 5 V to the power source line connected to the LED lamp 12 (see fig. 1) which is not depicted. The charging IC 204 generates a voltage of 5 V by means of USB OTG (= on-the-go), for example, and outputs this voltage to the power source line connected to the LED lamp 12.

The battery protection IC 205 is a protection circuit for the secondary battery 203, and stops charging/discharging of the secondary battery 203 by controlling the switch 210 to an open state when a need for protection arises. It should be noted that the switch 210 is provided between the secondary battery 203 and an earth (ground) wire. For example, the battery protection IC 205 stops charging when overcharging is detected, stops discharging when overdischarge is detected, and stops large-current discharge when a short-circuit is detected.

The remaining capacity meter IC 206 is a circuit which receives a supply of the system power source VCC33 from the step-up/step-down DC/DC circuit 207, and calculates information indicating the state of the secondary battery 203 from values of the output voltage and output current of the secondary battery 203. The remaining capacity meter IC 206 calculates the SOC (= state of charge), SOH, and full charge capacity, for example.

The SOC is a charging ratio where the capacity in a state of full charge of the secondary battery 203 at the present time is taken as 100%, and the capacity in a state of complete discharge is taken as 0%. The full charge capacity of the secondary battery 203 at the present time is calculated by using the output voltage or output current, etc. of the secondary battery 203 when charging is complete. Moreover, the remaining capacity of the secondary battery 203 at the present time is calculated by using the output voltage or output current, etc. of the secondary battery 203 at each point in time.

The SOH is the percentage of the full charge capacity (Ah) of the secondary battery 203 at the present time (in a deteriorated state) when the full charge capacity (Ah) of the secondary battery 203 at the start of use (a new battery or an undeteriorated battery) is taken as 100%. The full charge capacity at the start of use is stored in the non-volatile memory unit 104 (see fig. 3). An "undeteriorated state" as referred to here means a state which is the same as for a new battery, or largely the same (e.g., 98% or more as compared to a new battery). It should be noted that a numerical value of the secondary battery 203 defined in a design specification, etc. is used for the full charge capacity (Ah) which is the same as for a new battery or largely the same as for a new battery.

The calculated SOH and remaining capacity are read to the MCU 201.

The step-up DC/DC circuit 208 is a circuit for stepping up the output voltage of the secondary battery 203 used to supply power to the heating coil 202. Moreover, a switch 209 is provided between the step-up DC/DC circuit 208 and the heating coil 202, and a stepped-up voltage is applied to the heating coil 202 only when the switch 209 is controlled to a closed state (ON state) by means of the MCU 201.

### <Heating Cycle>

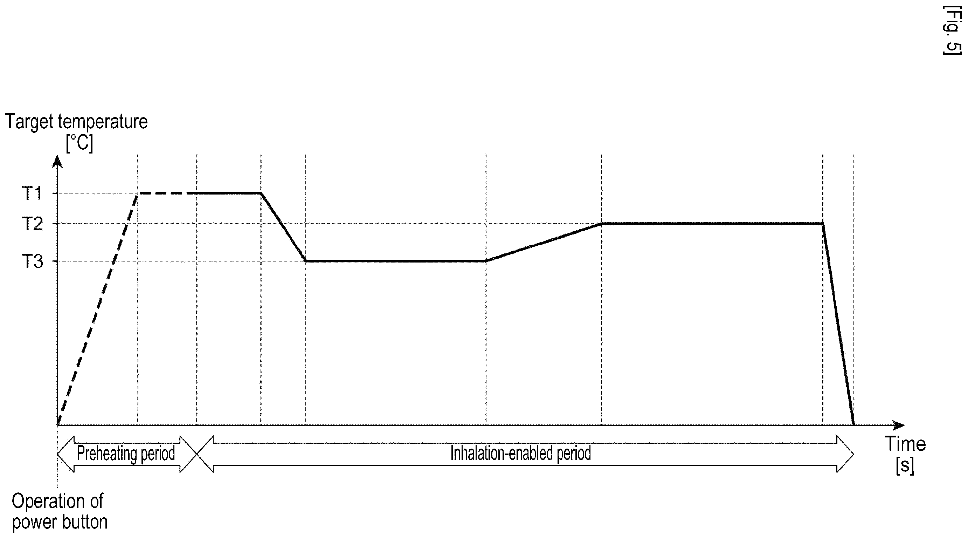

Fig. 5 is a diagram illustrating an example of a control profile used in the aerosol-generating device 1. The vertical axis denotes target temperature [°C], and the horizontal axis denotes time [s].

The MCU 201 (see fig. 4) implements temperature management of the heating coil 202 (see fig. 4) based on the control profile.

Heating of the heating coil 202 based on the control profile is started by means of operation of the power button 11 (see fig. 1). It should be noted that the temperature of the heating coil 202 and the temperature of the stick-type substrate 30 (see fig. 3) immediately after operation of the power button 11 has been detected are largely the same as the ambient air temperature in which the aerosol-generating device 1 is being used. From this state, an increase in the temperature of the heating coil 202 is started.

The aerosol-generating device 1 will be used in various seasons and at various air temperatures. If there is a single target temperature, then when the aerosol-generating device 1 is used outdoors in winter, for example, the time taken until the heating coil 202 (or stick-type substrate 30) reaches the target temperature is longer than in a standard usage environment because of the large temperature difference between the surrounding air temperature and the target temperature. The standard usage environment means a situation in which the air temperature is 25°C, for example.

A "preheating period" is therefore provided at the beginning of the control profile in the aerosol-generating device 1 used in this embodiment.

The preheating period is a period for causing the temperature of the heating coil 202 to rise to a maximum target temperature T1 in a single operation. By providing this preheating period, it is possible to raise the temperature of the stick-type substrate 30 to the maximum target temperature T1 within a predefined period, regardless of differences in the environment during use.

When the preheating period has ended, the control profile transitions to an "inhalation-enabled period". When the inhalation-enabled period starts, inhalation of the aerosol generated from the aerosol source of the stick-type substrate 30 is enabled.

In the control profile shown in fig. 5, when the inhalation-enabled period starts, the temperature of the heating coil 202 is reduced to a minimum target temperature T3 (<T1) so that aerosol generation does not proceed excessively.

When the temperature of the heating coil 202 falls to the minimum target temperature T3, the MCU 201 maintains that temperature for a certain time. Moreover, when the latter half period of the control profile starts, the MCU 201 increases the temperature of the heating coil 202 to a target temperature T2 (smaller than T1 but greater than T3) and maintains that temperature. By means of this temperature increase, all of the aerosol source remaining in the stick-type substrate 30 can be fully used.

Moreover, when a predefined time has elapsed from the start of the inhalation-enabled period, the MCU 201 terminates heating control of the heating coil 202. The temperature of the heating coil 202 gradually falls to the surrounding air temperature as a result.

### <Correcting Threshold Commensurate with Deterioration of Secondary Battery>

As described above, repeated charging and discharging causes deterioration of the secondary battery 203 (see fig. 4). The internal resistance value of the secondary battery 203 increases as deterioration progresses. When the internal resistance value rises, the output voltage of the secondary battery 203 falls below the output voltage in the initial state (i.e. the undeteriorated state).

Even if there is a reduction in the output voltage of the secondary battery 203, the voltage required for the system power source VCC33 and for heating of the heating coil 202 can still be generated by means of the step-up/step-down DC/DC circuit 207 and the step-up DC/DC circuit 208.

However, there are also limits to voltage boosting afforded by the step-up/step-down DC/DC circuit 207 and the step-up DC/DC circuit 208. This voltage will be referred to as the "guaranteed operating voltage". The guaranteed operating voltage is defined as the minimum voltage which the output voltage of the secondary battery 203 should satisfy during heating of the heating coil 202, for example.

The guaranteed operating voltage is the same regardless of the extent of deterioration of the secondary battery 203, but since the internal resistance value of a secondary battery 203 in which deterioration has progressed is greater than the value in the initial state, the current output from the secondary battery 203 flows less readily. As a result, as deterioration progresses, the current value supplied from the deteriorated secondary battery 203 will become smaller than in the initial state, even if the output voltage is the same. That is to say, the power supplied from the secondary battery 203 close to the guaranteed operating voltage decreases as deterioration progresses.

However, the power consumed by the aerosol-generating device 1 differs for a deteriorated secondary battery 203 and a secondary battery 203 in the initial state.

Consequently, as the secondary battery 203 deteriorates, the secondary battery 203 outputting an output voltage close to the guaranteed operating voltage will require more remaining capacity than in the initial state to supply the required power to each part. In other words, a secondary battery 203 in the initial state uses up less remaining capacity when outputting an output voltage close to the guaranteed operating voltage than a secondary battery 203 in which deterioration has progressed.

Therefore, in an existing aerosol-generating device 1, the threshold used to determine whether or not the secondary battery 203 has sufficient remaining capacity to enable an unused stick-type substrate 30 (see fig. 3) to be fully used is set on the basis of the remaining capacity required to maintain the guaranteed operating voltage in a deteriorated state, and the capacity consumed by a standard user in fully using an unused stick-type substrate 30.

As a result, even in a deteriorated secondary battery 203, it is possible to determine whether or not there is sufficient remaining capacity to fully use an unused stick-type substrate 30 before the start of heating of the heating coil 202.

Meanwhile, the remaining capacity in the secondary battery 203 required to generate the guaranteed operating voltage is far less when there is little deterioration of the secondary battery 203. As a result, the remaining capacity of the secondary battery 203 is judged to be below the threshold while there is little deterioration of the secondary battery 203, regardless of whether several stick-type substrates 30 could still actually be heated.

A system in which the threshold used to determine whether or not an unused stick-type substrate 30 could be fully used is corrected in accordance with the extent of deterioration of the secondary battery 203 is therefore adopted in this embodiment.

In this embodiment, the SOH is used as an index of the extent of deterioration of the secondary battery 203. It should be noted that the MCU 201 (see fig. 4) implements the correction to the threshold based on the SOH.

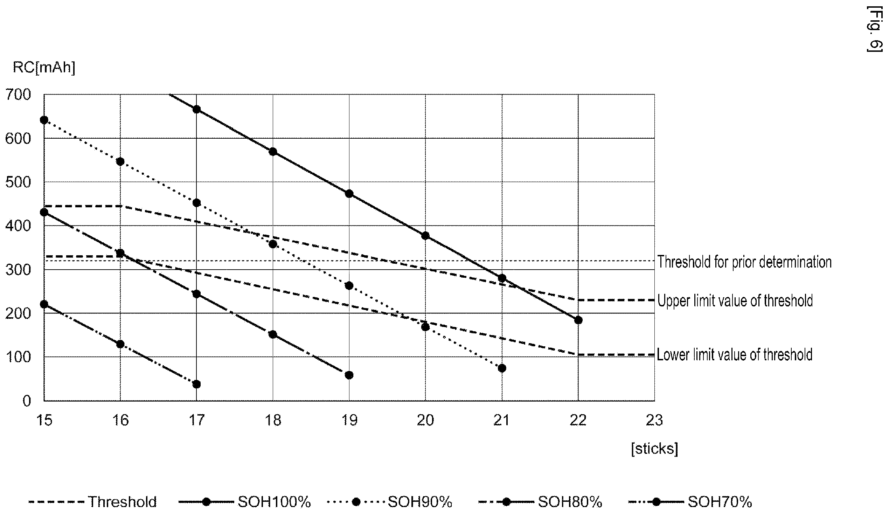

Fig. 6 is a diagram illustrating the threshold used to determine whether or not the secondary battery has the remaining capacity needed in order to fully use one unused stick-type substrate.

In the following description, the determination of whether or not one unused stick-type substrate 30 can be fully used with the remaining capacity of the secondary battery 203 at the present time will also be referred to as the "last-stick determination". Furthermore, the threshold used for this determination will also be referred to as the "last-stick determination threshold".

The vertical axis shows the remaining capacity RC of the secondary battery 203, and the horizontal axis shows the number of stick-type substrates 30 for which inhalation is possible with one full charge.

The thick dashed lines shown in the drawing denote the upper limit value and lower limit value of the last-stick determination threshold. The difference between the lower limit value and the upper limit value here is set to be equal to or greater than the capacity required for one unused stick-type substrate 30 to be fully used.

Fig. 6 shows a graph (broken lines) in which the threshold decreases as the number of sticks for which inhalation is possible increases, but this graph of the threshold is drawn from the perspective of illustrating the relationship with the straight lines showing changes in remaining capacity accompanying an increase in the number of sticks for which inhalation is possible at each SOH of the secondary battery 203.

In the case of fig. 6, the lower limit value of the last-stick determination threshold applied to a secondary battery 203 having 100% SOH is roughly 105 mAh, and the upper limit value is roughly 230 mAh.

The lower limit value here is defined as the remaining capacity of the secondary battery 203 when the output voltage is a voltage enabling operation. That is to say, the lower limit value here is the remaining capacity of the secondary battery 203 at which the guaranteed operating voltage can be generated.

Accordingly, this is affected by the operation-enabling voltage defined for the aerosol-generating device 1, and differences in the type and characteristics of the secondary battery 203 which is used. The initial value of 105 mAh is therefore ultimately just an example of a numerical value used for convenience of description. The same also applies to other numerical values.

The upper limit value is defined as a value obtained by adding a predetermined value to the lower limit value.

The predetermined value in this embodiment is provided as an added value comprising the capacity of the secondary battery 203 required to fully use one unused stick-type substrate 30 plus a margin.

In the case of this embodiment, the capacity of the secondary battery 203 required to fully use one unused stick-type substrate 30 is 105 mAh and the margin is 20 mAh.

The predetermined value is therefore 125 mAh. If the margin were 0 mAh, then the predetermined value would be 105 mAh, and if the margin were 30 mAh, then the predetermined value would be 135 mAh.

In the case of fig. 6, the lower limit value of the last-stick determination threshold when the SOH is 80% is roughly 320 mAh, and the upper limit value is roughly 445 mAh.

The upper limit value here is also provided as a value obtained by adding the predetermined value of 125 mAh to the value of the lower limit value.

In this embodiment, the lower limit value of the threshold when the SOH is between 80% and 100% is determined by linear interpolation between roughly 105 mAh and roughly 320 mAh.

Furthermore, the upper limit value of the threshold when the SOH is between 80% and 100% is determined as a value obtained by adding the predetermined value (i.e., 125 mAh) to the lower limit value determined by means of linear interpolation. These lower limit values mean minimum values of the remaining capacity required by the secondary battery 203 at the present time in order to generate the guaranteed operating voltage.

Incidentally, the lower limit value of the threshold when the SOH is 80% or less is fixed at 320 mAh and the upper limit value is fixed at 445 mAh.

It should be noted that increases in the lower limit value and upper limit value of the threshold are not limited to linear form, and these increases may also be made in accordance with approximation or a data table.

For reference, the threshold for a prior determination is a fixed value of roughly 320 mAh, irrespective of the extent of deterioration of the secondary battery 203. In fig. 6, the threshold used for the prior determination is shown by a thin dashed line.

The MCU 201 (see fig. 4) in this embodiment acquires the SOH and the remaining capacity at the present time of the secondary battery 203 from the remaining capacity meter IC 206 (see fig. 4) and prohibits heating of the stick-type substrate 30 by the heating coil 202 if the remaining capacity at the present time is below the threshold commensurate with the SOH.

For example, the straight line showing the change in remaining capacity when the SOH is 100% lies between the lower limit value and the upper limit value of the determination threshold when inhalation is possible for 22 sticks. It should be noted that when the threshold used for the prior determination is used, the remaining capacity of the secondary battery 203 when the SOH is 100% will satisfy 320 mAh or greater at 20 sticks.

Consequently, when the determination threshold adopted in this embodiment is used, the number of stick-type substrates 30 for which inhalation is possible with a secondary battery 203 having an SOH of 100% increases from 20 to 22.

For example, the straight line showing the change in remaining capacity when the SOH is 90% lies between the lower limit value and the upper limit value of the determination threshold when inhalation is possible for 19 sticks. It should be noted that when the threshold used for the prior determination is used, the remaining capacity of the secondary battery 203 when the SOH is 90% will satisfy 320 mAh or greater at 18 sticks.

Consequently, when the determination threshold adopted in this embodiment is used, the number of stick-type substrates 30 for which inhalation is possible with a secondary battery 203 having an SOH of 90% increases from 18 to 19.

For example, the straight line showing the change in remaining capacity when the SOH is 80% lies between the lower limit value and the upper limit value of the determination threshold when inhalation is possible for 16 sticks. It should be noted that when the threshold used for the prior determination is used, the remaining capacity of the secondary battery 203 when the SOH is 80% will satisfy 320 mAh or greater at 16 sticks.

Consequently, when the determination threshold adopted in this embodiment is used, and also when the threshold used for the prior determination is used, the number of stick-type substrates 30 for which inhalation is possible with a secondary battery 203 having an SOH of 80% remains at 16.

### <Processing Operation Example>

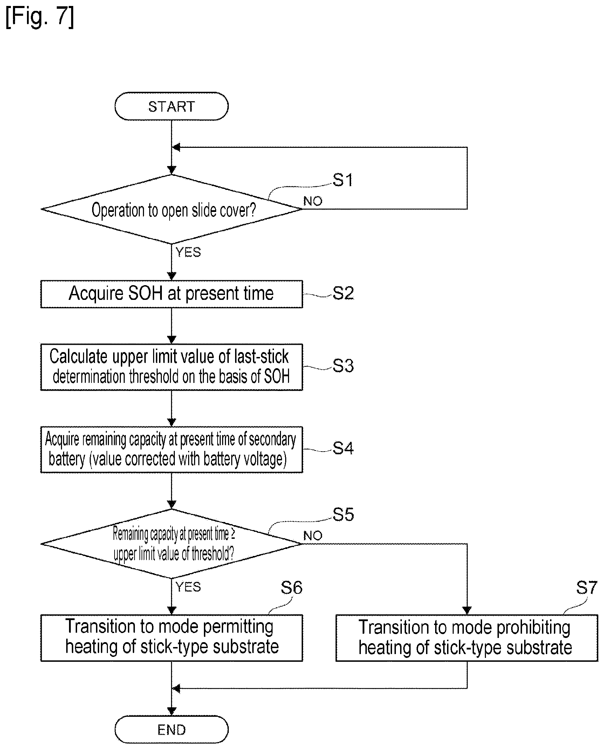

Fig. 7 is a flowchart illustrating last-stick determination processing performed by the aerosol-generating device 1 of Embodiment 1. Note that the symbol "S" in the drawings means "step".

The processing operations shown in fig. 7 are implemented by the MCU 201 (see fig. 4).

The MCU 201 first of all determines whether or not an operation to open the slide cover 20 (see fig. 1) has been detected (step 1).

A negative result is obtained in step 1 when an operation to open the slide cover 20 has not been detected. In this case, the MCU 201 repeats the determination of step 1.

Meanwhile, an affirmative result is obtained in step 1 when an operation to open the slide cover 20 has been detected.

In this case, the MCU 201 acquires the SOH at the present time (step 2). The SOH at the present time is read from the remaining capacity meter IC 206 to the MCU 201.

The MCU 201 then calculates the upper limit value of the last-stick determination threshold on the basis of the SOH (step 3). For example, when the SOH is 100%, the upper limit value is set at roughly 230 mAh. The upper limit value here is the initial value of the threshold.

Moreover, when the SOH is 80% or less, the upper limit value is set at 445 mAh. Moreover, when the SOH is 80%-100%, the upper limit value is calculated as an intermediate value between 230 mAh and 445 mAh by means of linear interpolation.

The MCU 201 then acquires the remaining capacity at the present time of the secondary battery 203 (step 4). The remaining capacity at the present time of the secondary battery 203 is a value obtained by correcting the value read out from the remaining capacity meter IC 206 with the battery voltage. The MCU 201 implements the correction computation here. The correct remaining capacity is obtained by means of the correction computation. The details of the correction computation are already well known and will not be described here.

The MCU 201 then determines whether or not the remaining capacity at the present time is equal to or greater than the upper limit value of the threshold (step 5).

An affirmative result is obtained in step 5 when the remaining capacity at the present time is equal to or greater than the upper limit value of the threshold. In this case, the MCU 201 transitions to a mode permitting heating of the stick-type substrate 30 (step 6).

Meanwhile, a negative result is obtained in step 5 when the remaining capacity at the present time is smaller than the upper limit value of the threshold. In this case, the MCU transitions to a mode prohibiting heating of the stick-type substrate 30 (step 7).

### <Advantageous Effects>

If the aerosol-generating device 1 according to this embodiment is used, it is possible to increase the number of stick-type substrates 30 which can be fully used with a single full charge as compared to an existing device. It should be noted that an existing device means a device in which the last-stick determination threshold is provided as a fixed value.

As described above, in the aerosol-generating device 1 according to this embodiment, when the SOH of the secondary battery 203 is close to 100%, it is possible to increase the number of stick-type substrates 30 which can be fully used with a single full charge by around 2 as compared to an existing device.

Furthermore, in the aerosol-generating device 1 according to this embodiment, when the SOH of the secondary battery 203 is 90%, it is possible to increase the number of stick-type substrates 30 which can be fully used with a single charge by around 1. Moreover, when the SOH of the secondary battery 203 is around 80%, the number of stick-type substrates 30 which can be fully used with a single full charge is the same as with an existing device.

That is to say, if the aerosol-generating device 1 according to this embodiment is used, the smaller the amount of deterioration of the secondary battery 203, the greater the increase in the number of stick-type substrates 30 which can be fully used with a single full charge.

### EMBODIMENT 2

In this embodiment, a description will be given of another last-stick determination processing operation performed by the aerosol-generating device 1 (see fig. 1).

It should be noted that the external appearance, internal configuration, and electronic circuit connection configuration, etc. of the aerosol-generating device 1 envisaged by this embodiment are all the same as in Embodiment 1.

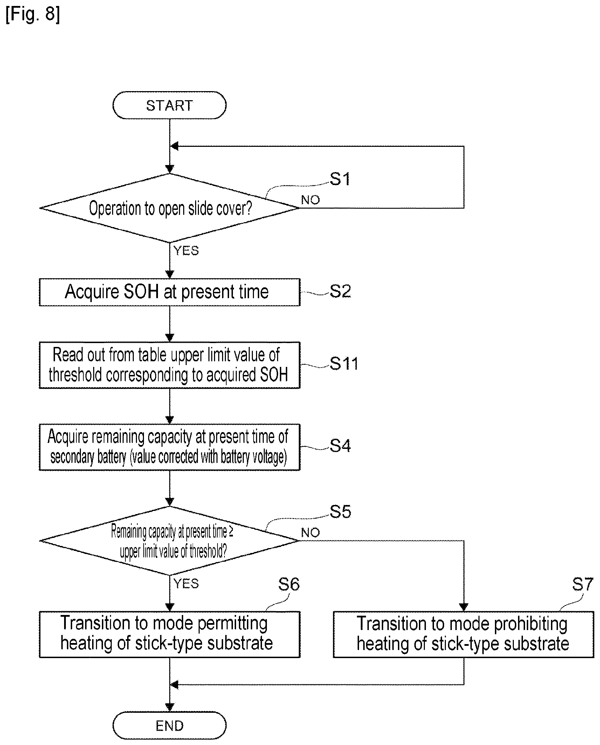

Fig. 8 is a flowchart illustrating last-stick determination processing performed by the aerosol-generating device 1 of Embodiment 2. Corresponding reference signs are given in fig. 8 for parts which correspond to those of fig. 7.

In this embodiment also, the MCU 201 determines whether or not an operation to open the slide cover 20 (see fig. 2) has been detected (step 1), and the MCU 201 acquires the SOH at the present time when an opening operation has been detected (step 2).

The MCU 201 then reads out from a table the upper limit value of the threshold corresponding to the acquired SOH (step 11). The table here is a table recording relationships between the SOH and the last-stick determination threshold, and is stored in the non-volatile memory unit 104, for example.

It should be noted that when the SOH at the present time read out from the remaining capacity meter IC 206 (see fig. 4) is not in the table, a threshold calculated by means of an interpolation computation will be used.

The subsequent processing operations are the same as in fig. 7

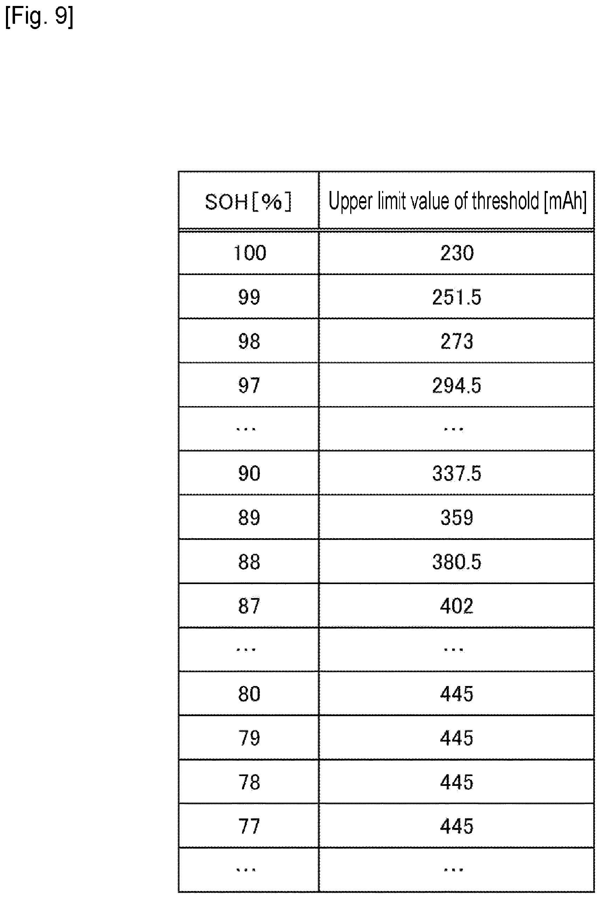

Fig. 9 is a diagram showing an example of the table used in step 11 in fig. 8. Numerical values of the SOH are arranged in 1% decrements in the left-hand column of the table shown in fig. 9, and numerical values providing the lower limit value of the corresponding threshold are arranged in the right-hand column of the table. In the case of fig. 9, the lower limit value of the threshold varies by 21.5 mAh for each 1% difference in the SOH.

It should be noted that the span of the decrements of the SOH may be 2% decrements or 5% decrements, or may be 0.1% decrements or 0.5% decrements.

Furthermore, the SOH read out from the remaining capacity meter IC 206 which is used may be rounded up or down at the decimal point.

### <Advantageous Effects>

The aerosol-generating device 1 according to this embodiment differs from Embodiment 1 in that the last-stick determination threshold is read out from a table, but the use of a threshold commensurate with the SOH in the last-stick determination is the same as in Embodiment 1.

Accordingly, in the same way as in Embodiment 1, the smaller the amount of deterioration of the secondary battery 203, the greater the increase in the number of stick-type substrates 30 which can be fully used with a single full charge.

### EMBODIMENT 3

In this embodiment, a description will be given of another last-stick determination processing operation performed by the aerosol-generating device 1 (see fig. 1).

It should be noted that the external appearance, internal configuration, and electronic circuit connection configuration, etc. of the aerosol-generating device 1 envisaged by this embodiment are all the same as in Embodiment 1.

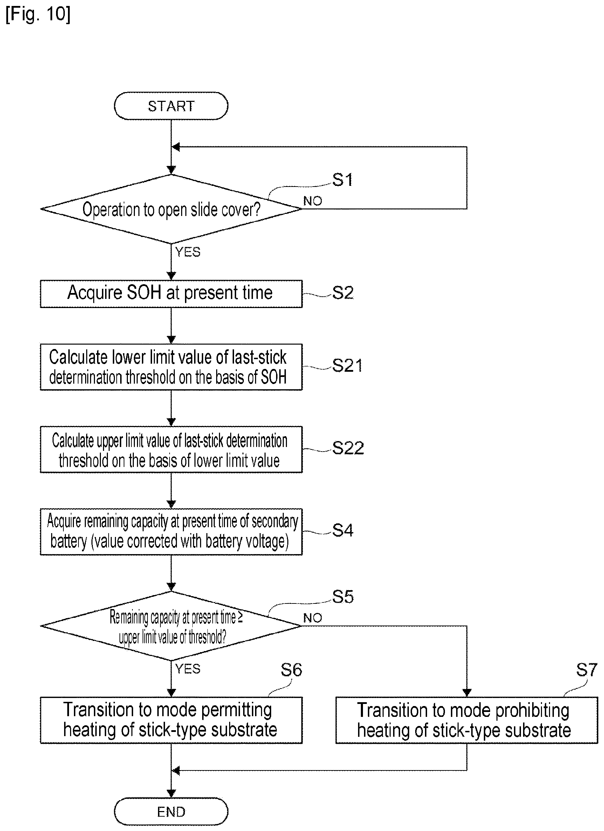

Fig. 10 is a flowchart illustrating last-stick determination processing performed by the aerosol-generating device 1 of Embodiment 3. Corresponding reference signs are given in fig. 10 for parts which correspond to those of fig. 7.

In this embodiment also, the MCU 201 determines whether or not an operation to open the slide cover 20 (see fig. 2) has been detected (step 1), and the MCU 201 acquires the SOH at the present time when an opening operation has been detected (step 2). The MCU 201 then calculates the lower limit value of the last-stick determination threshold on the basis of the SOH (step 21). For example, when the SOH is 100%, the lower limit value is set at 105 mAh, and when the SOH is 80% or less, the lower limit value is set at 320 mAh. Moreover, when the SOH is 80%-100%, the lower limit value is calculated as an intermediate value between 105 mAh and 320 mAh by means of linear interpolation.

The MCU 201 then calculates the upper limit value of the last-stick determination threshold on the basis of the lower limit value (step 22). Specifically, the MCU 201 adds the predetermined value to the lower limit value calculated in step 21 (the predetermined value being an added value comprising the capacity required to fully use one unused stick-type substrate 30 (see fig. 3) plus a margin). 125 mAh is used as the value added to the lower limit value here.

The subsequent processing operations are the same as in fig. 7

### <Advantageous Effects>

The aerosol-generating device 1 according to this embodiment differs from Embodiment 1 in that the last-stick determination upper limit value is calculated using the lower limit value, but the use of a threshold commensurate with the SOH in the last-stick determination is the same as in Embodiment 1.

Accordingly, in the same way as in Embodiment 1, the smaller the amount of deterioration of the secondary battery 203, the greater the increase in the number of stick-type substrates 30 which can be fully used with a single full charge.

### EMBODIMENT 4

In this embodiment, a description will be given of another last-stick determination processing operation performed by the aerosol-generating device 1 (see fig. 1).

It should be noted that the external appearance, internal configuration, and electronic circuit connection configuration, etc. of the aerosol-generating device 1 envisaged by this embodiment are all the same as in Embodiment 1.

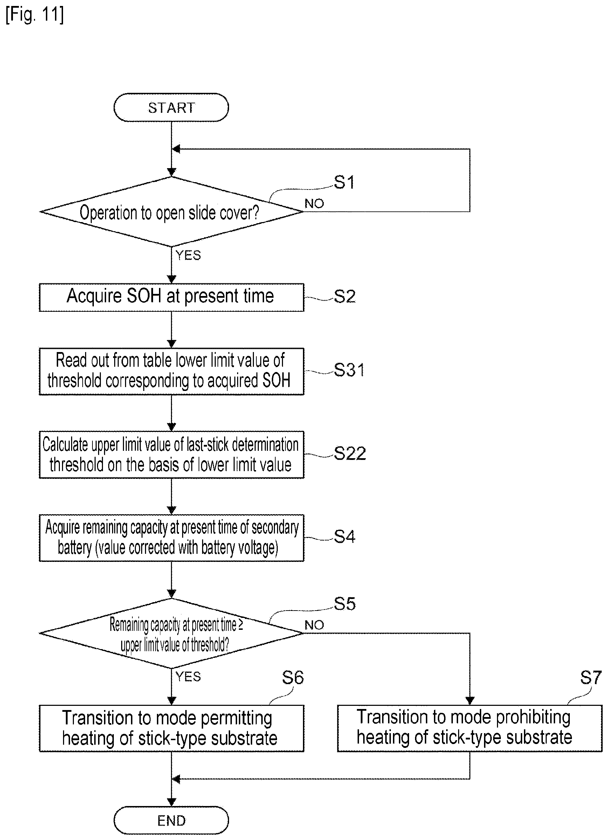

Fig. 11 is a flowchart illustrating last-stick determination processing performed by the aerosol-generating device 1 of Embodiment 4. Corresponding reference signs are given in fig. 11 for parts which correspond to those of fig. 10.

In this embodiment also, the MCU 201 determines whether or not an operation to open the slide cover 20 (see fig. 2) has been detected (step 1), and the MCU 201 acquires the SOH at the present time when an opening operation has been detected (step 2).

The MCU 201 then reads out from a table the lower limit value of the threshold corresponding to the acquired SOH (step 31). The table here is a table recording relationships between the SOH and the last-stick determination threshold, and is stored in the non-volatile memory unit 104, for example.

It should be noted that when the SOH at the present time read out from the remaining capacity meter IC 206 (see fig. 4) is not in the table, a threshold calculated by means of an interpolation computation will be used.

The subsequent processing operations are the same as in fig. 10

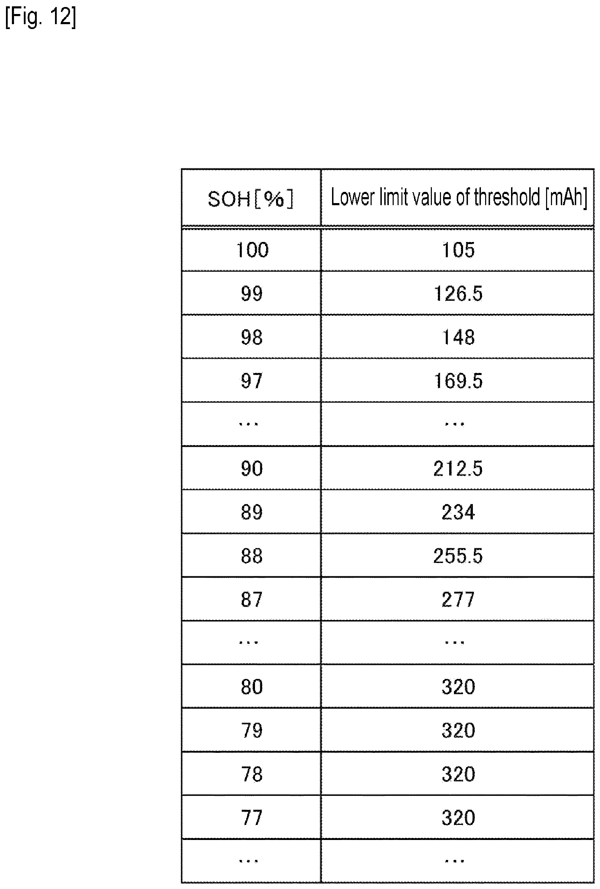

Fig. 12 is a diagram showing an example of the table used in step 31 in fig. 11. Numerical values of the SOH are arranged in 1% decrements in the left-hand column of the table shown in fig. 12, and numerical values providing the lower limit value of the corresponding threshold are arranged in the right-hand column of the table. In the case of fig. 12, the lower limit value of the threshold varies by 21.5 mAh for each 1% difference in the SOH.

It should be noted that the span of the decrements of the SOH may be 2% decrements or 5% decrements, or may be 0.1% decrements or 0.5% decrements.

Furthermore, the SOH read out from the remaining capacity meter IC 206 which is used may be rounded up or down at the decimal point.

### <Advantageous Effects>

The aerosol-generating device 1 according to this embodiment differs from Embodiment 3 in that the last-stick determination threshold is read out from a table, but the use of a threshold commensurate with the SOH in the last-stick determination is the same as in Embodiment 3.

Accordingly, in the same way as in Embodiment 1, the smaller the amount of deterioration of the secondary battery 203, the greater the increase in the number of stick-type substrates 30 which can be fully used with a single full charge.

### <Other Embodiments>

(1) Embodiments of the present invention were described above, but the technical scope of the present invention is not limited to the scope disclosed in the embodiments above. It will be obvious from the disclosure of the claims that the technical scope of the present invention also includes various modifications or improvements made to the embodiments above.
(2) In the embodiments described above, the SOH was used as an index indicating the state of deterioration of the secondary battery 203, but predicted lifespan or other information may equally be used. Expected lifespan is the expected number of charges/discharges or length of time until replacement is needed. When predicted lifespan is used as the state of deterioration, the longer the predicted lifespan, the smaller the last-stick determination threshold, and the last-stick determination threshold increases as the predicted lifespan becomes shorter.
(3) In the embodiments described above, the last-stick determination threshold is increased linearly as deterioration of the secondary battery 203 progresses, but this increase is not limited to a linear form. For example, the increase in the threshold accompanying progression of deterioration may equally be expressed by a non-linear simple increasing function. Furthermore, the threshold may be increased stepwise as deterioration progresses.
(4) In the embodiments described above, the remaining capacity at the point in time when the output voltage of the secondary battery 203 with an SOH of 100% decreased to the guaranteed operating voltage was defined as the initial value of the threshold, but the initial value of the threshold may be defined for a largely undeteriorated secondary battery 203, and the SOH need not be 100%.
(5) In the embodiments described above, the remaining capacity at the point in time when the output voltage of the secondary battery 203 with an SOH of 100% decreased to the guaranteed operating voltage was defined as the initial value of the threshold, but a value obtained by adding a margin to the lower limit value of the remaining capacity at the point in time when the output voltage of the secondary battery 203 with an SOH of 100% decreased to the guaranteed operating voltage may equally be used, for example.
(6) The embodiments above described a case in which the aerosol source is a solid, but the aerosol source may equally be a liquid. When the aerosol source is a liquid, a system is adopted in which the aerosol source is guided to a narrow tube known as a wick by using a capillary phenomenon, and a coil wound around the wick is heated to thereby vaporize the aerosol source.

It should be noted that when the aerosol source is a liquid, the aerosol source is heated in response to detection of inhalation, instead of using the control profile shown in fig. 5.

That is to say, the aerosol source is heated when the sensor unit 102 (see fig. 3) detects inhalation by the user. However, an upper limit (e.g., 2.5 seconds) is provided for the length of heating time for one inhalation, and even if inhalation continues beyond the upper limit, heating of the aerosol source is stopped at the time when the upper limit is reached.

Moreover, a preheating period may also be provided for heating of a liquid aerosol source. In the case of a liquid aerosol source, however, the target temperature in the preheating period is set at a lower temperature than the boiling point of the aerosol source.

Providing a preheating period so that the temperature of the liquid is raised beforehand reduces the temperature change until the aerosol source reaches the boiling point. An aerosol can therefore be generated immediately after inhalation without delay, even with a low air temperature in the usage environment of the aerosol-generating device.

(7) The embodiments above described an aerosol-generating device which generates an aerosol by heating a solid aerosol source, but the aerosol-generating device may equally generate an aerosol by separately heating each of a solid aerosol source and a liquid aerosol source. An aerosol-generating device of this type is also referred to as a hybrid aerosol-generating device.
(8) In the embodiments described above, the stick-type substrate 30 was described as an example of a solid aerosol source, but a capsule-type or other aerosol source is equally feasible.

### <Summary>

It should be noted that the present disclosure includes the following features.
(1) An aerosol-generating device comprising a control unit, a secondary battery, and a heating unit for heating an aerosol source, wherein the control unit corrects, in accordance with a state of deterioration of the secondary battery, a threshold used to determine whether or not there is remaining capacity enabling one unused aerosol source to be fully used.
(2) The aerosol-generating device as disclosed in (1), wherein the threshold increases as deterioration of the secondary battery progresses.
(3) The aerosol-generating device as disclosed in (2), wherein the threshold increases linearly as deterioration of the secondary battery progresses.
(4) The aerosol-generating device as disclosed in any one of (1) to (3), wherein an initial value of the threshold is defined by the remaining capacity enabling the secondary battery in a largely undeteriorated state to generate a guaranteed operating voltage of the aerosol-generating device.
(5) The aerosol-generating device as disclosed in (1), wherein the threshold is set in accordance with a minimum value of the remaining capacity required by the secondary battery at the present time in order to generate the guaranteed operating voltage of the aerosol-generating device.
(6) A program for causing a computer, which is provided in an aerosol-generating device comprising a secondary battery and a heating unit for heating an aerosol source, to implement: a function for correcting, in accordance with a state of deterioration of the secondary battery, a threshold used to determine whether or not there is remaining capacity enabling one unused aerosol source to be fully used; a function for determining whether or not the current remaining capacity of the secondary battery is above the threshold; a function for permitting heating of the aerosol source by the heating unit when the current remaining capacity of the secondary battery is above the threshold; and a function for prohibiting heating of the aerosol source by the heating unit when the current remaining capacity of the secondary battery is below the threshold.

### REFERENCE SIGNS LIST

1... Aerosol-generating device; 10... Main body device; 11... Power button; 12... LED lamp; 13... Stick-type substrate insertion port; 14... USB cable insertion port; 20... Slide cover; 101... Power source unit; 102... Sensor unit; 103... Notification unit; 104... Memory unit; 105... Communication unit; 106... Control unit; 107... Heating unit; 108... Heat insulating portion; 109... Holding portion; 30... Stick-type substrate; 201... MCU; 202... Heating coil; 203... Secondary battery; 204... Charging IC; 205... Battery protection IC; 206... remaining capacity meter IC; 207... Step-up/step-down DC/DC circuit; 208... Step-up DC/DC circuit; 209, 210... Switch

## Claims

1. An aerosol-generating device comprising a control unit, a secondary battery, and a heating unit for heating an aerosol source, wherein
the control unit corrects, in accordance with a state of deterioration of the secondary battery, a threshold used to determine whether or not there is remaining capacity enabling one unused aerosol source to be fully used.

2. The aerosol-generating device as claimed in claim 1, wherein the threshold increases as deterioration of the secondary battery progresses.

3. The aerosol-generating device as claimed in claim 2, wherein the threshold increases linearly as deterioration of the secondary battery progresses.

4. The aerosol-generating device as claimed in any one of claims 1 to 3, wherein an initial value of the threshold is defined by the remaining capacity enabling the secondary battery in a largely undeteriorated state to generate a guaranteed operating voltage of the aerosol-generating device.

5. The aerosol-generating device as claimed in claim 1, wherein the threshold is set in accordance with a minimum value of the remaining capacity required by the secondary battery at the present time in order to generate the guaranteed operating voltage of the aerosol-generating device.

6. A program for causing a computer, which is provided in an aerosol-generating device comprising a secondary battery and a heating unit for heating an aerosol source, to implement:
a function for correcting, in accordance with a state of deterioration of the secondary battery, a threshold used to determine whether or not there is remaining capacity enabling one unused aerosol source to be fully used;
a function for determining whether or not the remaining capacity of the secondary battery at the present time is above the threshold;
a function for permitting heating of the aerosol source by the heating unit when the remaining capacity of the secondary battery at the present time is above the threshold; and
a function for prohibiting heating of the aerosol source by the heating unit when the remaining capacity of the secondary battery at the present time is below the threshold.
